# EUROPEAN PATENT SPECIFICATION

(11) **EP 0 769 634 B1**
(45) Date of publication and mention of the grant of the patent: **03.09.2003**
(21) Application number: 95923172.1
(22) Date of filing: 30.06.1995
(51) Int. Cl.: F16D 55/00

(54) **NORMALLY CLOSED BRAKE**
NORMAL ANGELEGTE BREMSE
FREIN NORMALEMENT SERRE

(30) Priority: 02.07.1994 CN 94111061; 28.06.1995 CN 95106603
(43) Date of publication of application: 23.04.1997
(60) Divisional application: 02002657.1
(73) Proprietor: Xie, Xingyun, Changsha Hunan Province 410013 (CN)
(72) Inventor: Xie, Xingyun, Changsha Hunan Province 410013 (CN)
(74) Representative: MacDougall, Donald Carmichael
(86) International application number: PCT/CN95/00055
(87) International publication number: WO 96/001380

(56) References cited:
- DE-C- 833 363
- US-A- 1 808 008
- US-A- 1 855 057
- US-A- 2 573 939
- US-A- 2 783 861
- US-A- 2 838 150
- US-A- 3 994 376
- STAHL UND EISEN, vol. 92, no. 15, 20 July 1972, DÜSSELDORF, XP002055005

## Description

### FIELD OF THE INVENTION

This invention relates to a mechanical braking apparatus for use on retarding moving bodies.

### BACKGROUND OF THE INVENTION

Generally brakes, no matter mechanically powered, electromagnetic, or electromagnetic hydraulic devices, all of them require rather complicated, energy consumable power producers. For instance, the present normally closed brake demands additional power producer delivering external force to relieve normally closed braking. Cite the electromagnetic clutched brake for another example, its normally closed state is using spring force for braking in body retardation, when the body has to run or rotate, the electromagnet must be energized to produce electromagnetic force against the spring force to relieve normally closed braking.

A driven-released brake is disclosed in the patent of United States of American, with the patent number US 2.783.861, wherein the connecting mechanism is out of the transmission chain. More particularly, "When the drive shaft 11 rotates the driven shaft 12 against a resisting load, the driven member 17 and the floating brake member 22 are each bought into a neutral or aligned position by the arm 16" and "Adjacent to the driven member 17 is a floating brake member 22 formed with a plurality of peripheral notches 23" , "The driven member 17 and the floating brake member 22 are each formed with three equally spaced opposed radially extending V-shaped depressions arranged so that they will be directly aligned" , and the brake and the release, as well as the power / the torque transmission are directly realized. The braking or relieve braking with the driving member 14 against the driven member 17 need driving power source. This structure evidently is a rigid connecting, rather than the elastic connecting. Wherein a ball retainer 29 and an antifriction ball bearing 28, and above-mentioned V-shaped inclined ramps 26 and 27 only play a role in the increasing power, and don't take part in the power / the torque transmission.

Another patent of American No. 3,994,976 disclosed "A Self Actuating Mechanism for Braking A Driven Member Upon Discontinuating of Drive Thereto" , wherein "the sele-actuating braking means comprises a braking member 50 having a bore with a spiral groove 51 which threadedly engages the helical land or threads 29 on the threaded sleeve 25. "The Mechanism has a braking member connected a driving axle. Moreover., "On its upper surface the brake member 50 has a pair of diametrically disposed holes 60 which slidingly receive a pair of pins 61, the other ends of the pins 61 being pressed into the drive member 31···" The brake and the release are realized on the Mechanism by spiral engaging between the brake member and the threaded sleeve. The Mechanism evidently is also a rigid connecting, rather than the elastic connecting. It has a complex structure and a external power source is requisite for the completion of the brake and the release.

At April 26, 1989, Gazette of Patent for Chinese Invention disclosed a patent entitled "Braking apparatus employing the brake force transformed from the inertial force", with application number 87102097. In which the braking apparatus comprises additional power producer, servo mechanism, brake mechanism, reinforcement mechanism, and the main external braking force is converted from the inertial force resulted in the retarding body in movement. This apparatus has the features of short braking time, fast release and working reliability, however additional power producer is still required to provide brake operating force in normal kinematics state, and certain amount of energy shall be consumed in the operation of additional power producer.

United States Patent No. 1,808,008 discloses a brake mechanism wherein braking is released when a drive member rotates a driven member, and braking is achieved when the drive member is stopped.

In view of the previous facts, the invention is the further development and major improvement of current technology including the aforesaid patent, wherein proposed an apparatus having compact structure, enables to achieve braking or release braking without additional power in normal operation or static state.

Another object of the invention lies in proposal of an apparatus that can apply braking or release braking using emerged relative movement in the time interval after starting and ending transmission between the driving member and the driven member.

A further object of the invention lies in proposal of an apparatus achieving braking or releasing braking employing the concave-convex mating surface of the connecting mechanism between the driving member and the driven member.

### CONTENT OF THE INVENTION

First, it shall be explained that, in order to illustrate the content of the invention concisely in convenience, the description used terminology like "driving member", "driven member", "a first direction movement", "a second direction movement" etc., their implications are shown as follows.

"Driving member" and "driven member". The driving member and driven member are the members used to connect with the brake invention in the apparatus applying the brake invention, with regard to transmission relation, the driving member is located at the driving end, and the driven member located at the driven end.

"A first direction movement". Indicates the common movement carried out by the driving member bringing the driven member into action, and also demonstrates the common movement made by the driving member and driving block. A first direction movement is called common movement for short.

"A second direction relative displacement". Indicates the relative displacement made by the driving block or braking part relative to the friction surface on the fixed seat, or the relative displacement of fitting or disengaging movement relative to the driven member or acting block, i. e., the relative movement displacement realizing braking or relieving braking. Therefore, a second direction relative displacement is also presented as the relative displacement of fitting or disengaging movement.

The above objects are realised by the mechanical assembly of claim 1. Further prefered embodiments are described in the dependent claims.

And, in said brake, the friction surface on said fixed seat may be a conical surface, flat surface or cylindrical surface correspondingly.

The previous programme of conception and other objects and advantages will be further clarified relatively relating attached drawings for illustration of the embodiment.
FIG. 1 is a cross-section view of the first embodiment of the invention taken along the A-A line in FIG. 2, illustrating the structure of the sliding pin, sliding hole and connecting rod;
FIG. 2 is a cross-section view taken along the B-B line in FIG. 1;
FIG. 3 is an axial-section view of the force-switching mechanism;
FIG. 4 is a cross-section view taken along the G-G line in FIG. 3;
FIG. 5 is an exploded view of the concave-convex mating surface of the acting block and driving block;
FIG. 6 is cross-section view of the second embodiment of the invention taken along the C-C line in FIG. 7;
FIG. 7 is a cross-section view taken along the D-D line in FIG. 6;
FIG. 8 is a cross-section view of the compensation system taken along the E-E line in FIG. 6;
FIG. 9 is a cross-section view of the compensation system taken along the F-F line in FIG. 6;
FIG. 10 is an axial-section view of the third embodiment of the invention;
FIG. 11 is a top view of the invention applied in the reduction gear;
FIG. 12 is a cross-section view taken along the M-M line in FIG. 11;
FIG. 13 is a cross-section view taken along the N-N line in FIG. 11;
FIG. 14 is an axial-section view of the fifth embodiment of the invention;
FIG. IS is an axial-section view of the sixth embodiment of the invention;
FIG. 16 is a cross-section view of the seventh embodiment of the invention;
FIG. 17 is a cross-section view taken along the K-K line in FIG. 16;
FIG. 18 is a cross-section view taken along the H-H line in FIG. 16;
FIG. 19 is the eighth embodiment of the invention;

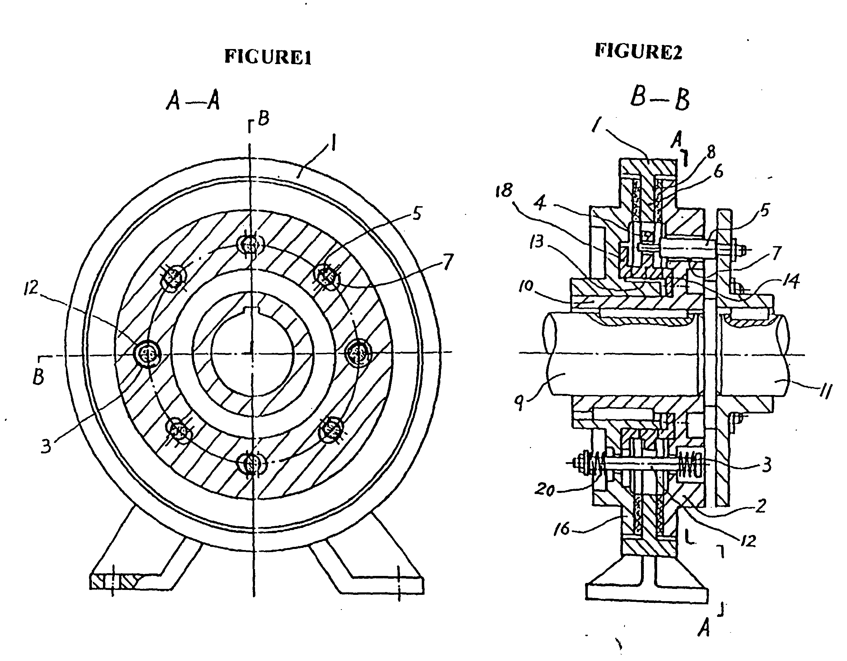

FIG. 1 to FIG. 5 illustrate the first embodiment of the invention.

### THE PREFERRED REALIZATION MODE OF THE INVENTION

FIG. 1 to FIG. 5 illustrate the first embodiment of the invention.

This is a normally closed brake, it comprises the fixed seat 1, the braking part 2, the tripping spring 3, the force switching mechanism 4. Moreover, there are the driven member 9, and the driving member 11. Its structure and inter-connecting relation is as follows:

The brake shoe 6 is installed on the fixed seat 1 (the two merged into a whole), the braking friction surface 8 of the braking part 2 may be a flat surface or conical surface, clutching with the friction surface of the brake shoe 6 thereby to realize or release braking. FIG. 2 shows the close contact state of the friction surface of the brake shoe 6 and the friction surface of the braking part, i. e. in braking state.

On the braking part 2, sliding hole 7 taken along the circular arc direction and the axle sleeve 10 of the driven member in use of connecting the passive driven member 9 are installed, the sliding hole 7 has certain length taken along, the circular arc direction. Since the braking part 2 and the axle sleeve 10 is merged into a whole, therefore when the braking part 2 and the brake shoe 6 are in braking state via close contact, braking of the passive driven member 9 is realized via axle sleeve 10, and through mating of the axle sleeve and driven member 9, the braking part 2 is by way of sliding taken along axial direction relative to the driven member 9.

One end of the connection rod is mounted on the braking part 2, the spring 3 is mounted on that end of the connecting rod, its spring force exerted on the braking part 2. When the brake is in braking state, via the action of the spring 3, the braking part 2 imposes close contact to the brake shoe 6 (the action of the brake shoe 6 and the spring 20 to be stated hereafter).

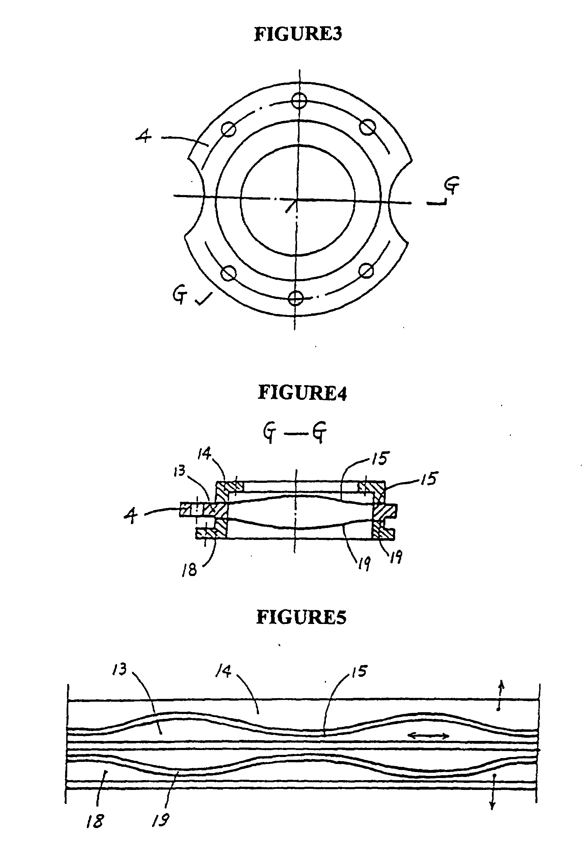

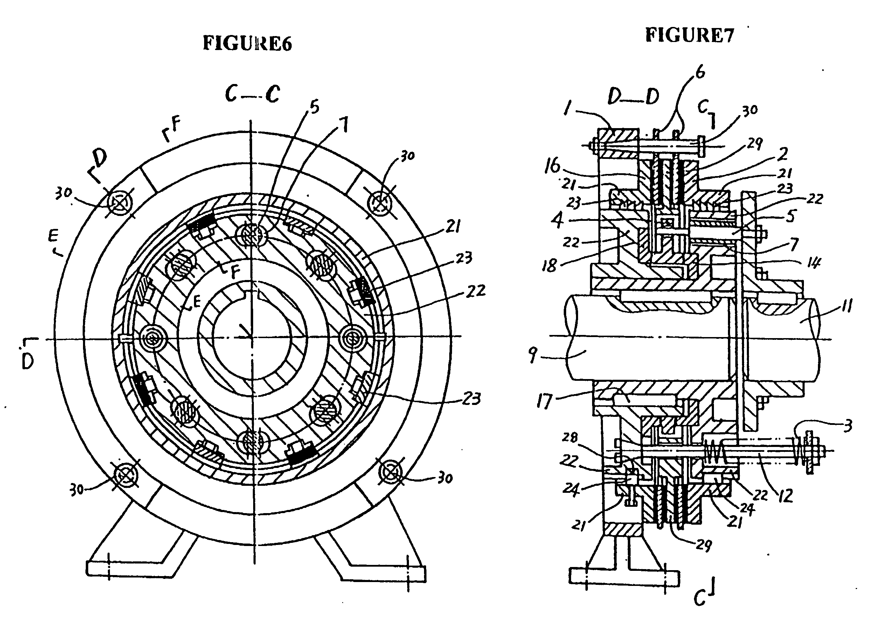

The force switching mechanism 4 comprises the acting block 13 connected with the driving member 11 and the driving block 14 secured with the braking part 2 (refer to FIG. 3 to FIG. 5). The contact surface of the acting block 13 and driving block 14 is the concave-convex mating contact surface 15 (equivalent to the driven member of the cam mechanism also having cam surface). When the driving part acquired active force, it sets the acting block into rotation, the cam segment whereupon moves towards the cam of the driving block 14 and exert a thrust on the driving block 14, brings the driving block 14 into axial movement (as shown by the arrow in FIG. 5), thereby taking the driven member 2 against the acting force of the spring 3 to move outwards, as a result, the braking friction surface of the braking part 2 to be separated from the brake shoe 6 and release braking.

The sliding pin 5 is located in the sliding hole of the braking part 2, one end is connected with the driving member 11, another end is matching with the acting block 13 of the force switching mechanism 4 (see FIG. 1). The sliding pin is movable relative to the sliding hole therein. By means of the displacement of the sliding pin 5 emerged in the sliding hole 7, set the acting block 13 into rotation, then the braking part 2 shall be driven to move via the driving block 14.

The invention relieves normally closed braking, the process taking the passive driven member 9 into normal movement is: When the driving member 11 is started by an active element like a motor and beginning to run, the driving member 11 obtained active force and then start to rotate and brings the sliding pin 5 into displacement in sliding hole 7, thus another end of the sliding pin 5 sets the acting block 13 of the force switching mechanism into rotation, then the acting block 13 exert a thrust on the driving block 14, using the driving block 14 to move braking part 2 outwards and gradually relieve braking, when the braking is not yet completely relieved, the passive driven member 9 still retain static state. When the sliding pin 5 displaced to one end of the sliding hole 7, braking is completely relieved. At present, the sliding pin 5 acts as the transmitting axis of the torque to bring the braking part 2 into rotation, then the passive driven member 9 in the axle sleeve 10 of the braking part will start normal movement. Specifically, using the lead time between the first rotation of the driving member 11 and the temporal static state of the driven member 9, through the displacement of the sliding pin 5 in the sliding hole 7, brings the acting block 13 into rotation, enables the driving block 14 to move the braking part 2 outwards and relieve braking. When the braking is completely relieved, the passive driven member run normally, the acting block 13 of the force switching mechanism turn by the action of the sliding pin 5, due to the restriction of the position of the sliding hole 7, ensure the convex segment on the acting block 13 to contact with the convex segment reliably, to retain the relieving state of braking.

The process of recovering normally closed braking state is, when braking is needed, cut off the power source of the driving component (like a motor); because of the loss in active force, the driving member 11 decelerated due to the reaction torque relative to running, then the sliding pin 5 makes a reverse displacement relative to starting in the sliding hole 7, thus brings the acting block 13 into a relevant reverse rotation, makes the convex segment of the acting block 13 to move towards the concave surface segment on the driving block 14, until the thrust between the acting block and the driving block canceled. Since the tripping spring 3 exerted on the braking part 2, therefore the braking part 2 hold down by the spring 3 to contact the brake shoe 6, a friction resistance emerged to stop the movement of the braking part 2, the passive driven member 9 connected to the braking part 2 and axle sleeve 10 retards correspondingly, i. e. realized braking.

It should be reminded that, the above-mentioned description only relates to the mating situation of an axial flank of the acting block 13 as the acting surface matching with the cam acting surface of the driving block 14, however, actually it is a mating structure of the acting block 13 fitting with the two driving blocks 14 and 18 as shown in FIG. 1 to FIG. 5 (refer to the lower part of the acting block in FIG. 5), not only the braking part 2, but also another braking part 16 exists in the structure. As a matter of fact, the braking part 16 may not be installed in this embodiment, as can be known from the previous description, generally the action of a braking part 2 is adequate, a simple plate may be replaced on the position of the braking part 16, while the other end of the connecting rod 12 may be connected to the plate. Hereafter the second embodiment of the invention shall be described in detail for the structure with the braking part 16. (Another driving block 18 contact surface 19 and the tripping spring 20 are shown in FIG. 4 as follows).

It should also be reminded that, the interconnection relation of the driven member and driving member in the embodiment is actually equivalent to an elastic coupling.

The second embodiment of the invention is shown in FIG. 6 to FIG. 9, in which the same or similar parts in the above-mentioned embodiment are scaled out in the same labels.

A braking part 16 corresponding to the braking part 2 is installed on the other side of the brake shoe 6, and the braking friction surface of the braking part 16 corresponds to the clutching of another flank of the brake shoe 6. The another end of the acting block 13 sets up the driving block 18 corresponding to the driving block 14 (refer to FIG. 4, FIG. 5), the convex-concave contact surface 19 of the acting block 13 and the driving block 18 is symmetrical to the contact surface 15. A sliding key 17 is installed between the axle sleeve of the braking part 16 and the axle sleeve of the braking part 2, to bring the two members into their common movement and stopping simultaneously, and the two braking parts are movable relative to each other taken along the sliding key in axial direction. The two ends of the connecting rod are connected to the braking part 2 and braking part 16 respectively, the spring 3 is mounted at the end of the connecting rod 12 on the braking part 2, and the elastic force of the spring exerts on the braking part 2. A spring 20 symmetrical to the spring 3 may be mounted at another end of the connecting rod 12 (refer to FIG. 2), the spring force of the spring exerts on the braking part 16. Moreover, the other end of the connecting rod 12 can also be secured on the braking part 16, the spring 3 acts on the braking part 16 via the connecting rod 12 (see FIG. 7). Friction lining is installed on the braking friction surface of the braking part 2 and braking part 16, in order to be acted evenly, at least two sliding pins 5 and corresponding sliding holes 7 shall be installed and symmetrically uniform distributed, there are 6 sliding holes 7 on the braking part 2 of the embodiment (see FIG. 6), and there are 6 relevant sliding pins 5, in order to be evenly acted upon, at least two connecting rods 12 are used for linking braking parts shall be installed and set up in symmetric homogeneity, there are two tripping springs 3 in the embodiment, two tripping springs 20 may be used or not be installed.

The working process of releasing braking state in the second embodiment of the invention is, acting block 13 turn according to the rotation of the sliding pin 5 in the start of the driving member acquiring active force, and exerts an outward thrust on the driving block 14 and driving block 18 located at the two ends, enables the braking part 2 and braking part 16 to move outwards simultaneously to depart from the brake shoe 6, achieve the relieve of normally closed braking, and result in normal operation of the passive driven member. When the driving member lost the active force, the acting block 13 turn in opposite direction following the sliding pin 5, enables the convex surface segment of the acting block move towards the concave surface segment, cancel the thrust, the tripping spring 3 and tripping spring 20 act on the braking part 2 and braking part 16 respectively, or exert on the braking part 2 and braking part 16 by tripping spring 3 via connecting rod simultaneously, move the two braking parts inwards to make tight contact with the brake shoe 6, and recover normally closed braking state.

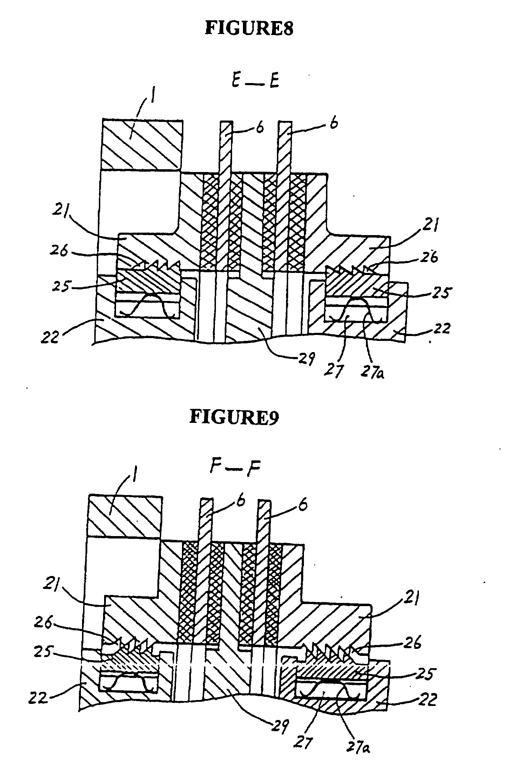

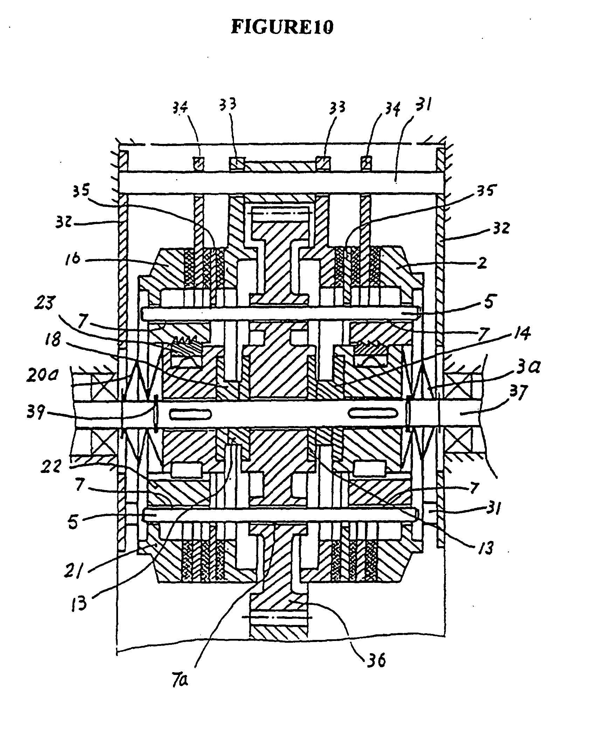

In the embodiment 2, both the braking part 2 and braking part 16 can also be composed by the disc 21 having internal teeth and the core 22, the braking compensation system 23 and a sliding key 24 which enables the disc and core to run and stop simultaneously are installed between the disc 21 and the core 22, the sliding key 24 is also used to ensure balance of the mounting structure of the disc taken along the core. In the embodiment, the brake compensation system on the braking part 2 and the braking part 16 is symmetrically installed. The brake shoe 6 has biplate structure, a sliding connection is achieved by the supporting shaft 30, in addition, in the biplate brake shoe 6, an intermediate inner disc 29 is also installed on the connecting rod 12 to enhance the friction force in braking. The brake compensation system is an improved gear ring structure, i. e.: Gear ring 26 is installed in the inner circle of the disc 21, the tooth block 25 is set up on the circle of the core 22 (refer to FIG. 8, FIG. 9), the tooth block 25 has external teeth mating with the gear ring 26, the outboard of each tooth is a slope, and inside is a vertical plane perpendicular to the axis of the drive shaft. Said gear ring 26 and the tooth block 25 may be flank matched, the spring 28 is installed in the bottom of the sliding key 24, the sliding key 24 may be adjusted by a screw, set the disc 21 and core 22 to turn taken along the thread, to carry out manual adjustment of the friction spacing. The tooth block 25 is set up in the notch 27 formed around the circular direction in the core 22, and the spring 27a exerting on the tooth block 25 is installed in the bottom of the notch 27 (see FIG. 8). The tooth blocks 25 are set up in pairs, there are four pairs with eight blocks in total in the embodiment, in which part of them are partial evenly arranged in pairs (four pairs in the embodiment, which are not blackened in FIG. 6) in complete contact (see FIG. 8). Moreover, homogeneously arranged in pairs ( four blackened in FIG. 6) are in partial contact (see FIG. 9). Complete contact is in working state, i. e. when the core of the braking part is driven by the force switching mechanism and moves outwards, the disc is set to move outwards and relieve braking. When the thrust of the force switching mechanism is removed, the tripping spring exerted on the core, make a close contact between the disc and the brake shoe to realize braking. The tooth block having partial contact teeth shall be in compensation state, when the friction lining of the disc are worn out to a certain extent, under the action of the driving block, the core 22 makes a relative movement with respect to the disc 21 in outward movement, the tooth block 25 move downwards in the notch against the action of the spring 27a, and the teeth on the block slip into the next gear ring of the disc, i. e. to be in complete contact turn to working state, and the tooth block originally in complete contact changed to compensation state of partial contact.

It should be emphasized that, said compensation system 23 in the embodiment 2, may be used in other brakes having disc braking parts according to its principle, like the descriptions of the embodiments 3, 4, 5, 6 hereafter.

The embodiment 3 of the invention is shown in FIG. 10. Similarly, the same or similar parts with the above-mentioned embodiments are scaled out with the same labels.

FIG. 10 is the cross section view of the axial structure of the embodiment. The embodiment is a variant based on the above-mentioned embodiment. In which the fixed seat comprises of three connecting axes 31 and two side plates 32 connected to the both ends of the three axes. Brake shoe 6 comprises of two discrete discs 33, both are secured on the connecting axle 31, braking part 2 and braking part 16 and the two discrete discs 33 are corresponding to the two discrete discs 33 of the brake shoe 6. Between the braking part 2 and braking part 16 and two discrete discs 33, the brake shoe 34 is connected on the connecting axle 31, and is movable taken along the axle; on the side face of the brake shoe 34, coaxial servo inner disc braking part 35, braking part, brake shoe and the friction surface of the servo inner disc braking part clutched in mutual one-to-one correspondence. Thus said multi-plate double disc structure takes driving part 11 as intermediate wheel. In the embodiment, the intermediate wheel is the drive gear 36, installed between the two discrete discs 33, and suited on the axle 37. The axle 37 is the passive driven member 9, and plays a part in connection as the connecting rod 12 of the braking part. The sliding pin 5 threaded the drive gear 36, brake shoes 2, 16 and the servo inner disc braking part 35, its both ends are located in the sliding holes of the braking part 2 and braking part 16 respectively. The sliding hole 7 may also be modified to fit in coupling with the sliding pin 5, and set up sliding hole 7 on the drive gear 36. The spring 3 and the spring 20 are mounted on the both ends of the axle 37; the acting block 13 in the force-switching mechanism is a two block discrete part, connected to the two end faces of the drive gear 37 respectively. When the driving block 14 and driving block 18 exert driving thrust on the braking part 2 and braking part 16, the two braking parts 2 and 16 overcome the acting forces of the tripping springs 3a and 20a to move outboard, enables the brake shoe 34, servo inner disc braking part 35 to be in a loosen condition without pressure and relieved braking. When the thrust of the driving blocks 14 and 18 canceled, the action comes from the two tripping springs, the braking parts 2 and 16 exert pressure on the servo inner disc braking part 35 and the brake shoe 34, brings them to move inwards, until making mutual close contact and achieve braking.

When the brake release in the embodiment 3, if the acting forces of the tripping springs 3a and 20a are adequate, then the braking parts 2, 16 may be restricted to move in a limiting range, and may also be restricted in position via setting up circles 39, enable them to make limited movement, and ensure the concave-convex surface of the acting block 13 not to pass the convex-concave surface of the driving block 14. No sliding pins and sliding holes are needed to set up in this type of structure, and direct force transmissions are carried out by the acting block 13 and the driving block 14. Same as the description of the embodiment 1, only the braking part 2 and no braking part 16 is installed.

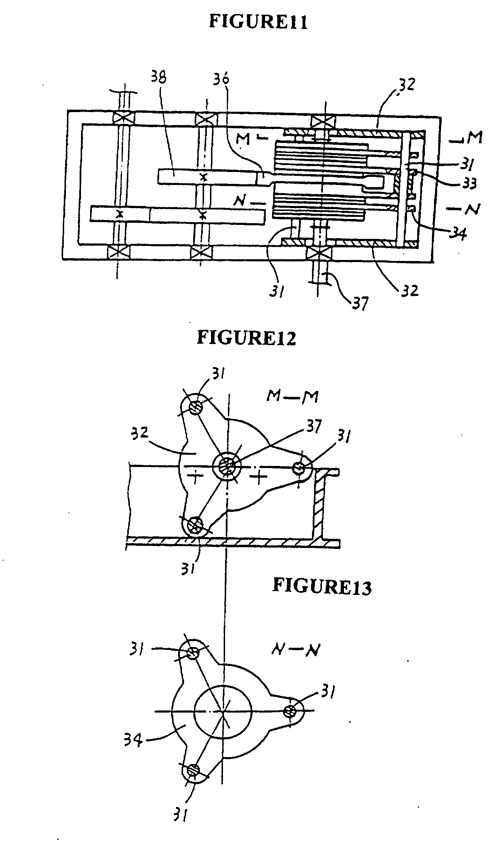

The fourth embodiment is shown in FIG. 11 - FIG. 13, in which the same or similar parts in the above-mentioned embodiment are scaled out with the same labels.

This embodiment is the living example of the application of the embodiment 3 in reduction gears, relevant connecting mechanism refer to FIG. 11 to FIG. 13. The two side plates 32 are connected to the two inwalls of the reduction gear box respectively, transmission gear 36, i. e. the driving member, is engaged with the fore drive gear 38, and the passive driven member is the output transmission shaft 37. Concerning the connecting axle 31, the discrete disc 33 and the brake 34 in the drawings are the same with the embodiment 3, and shall not repeat herein.

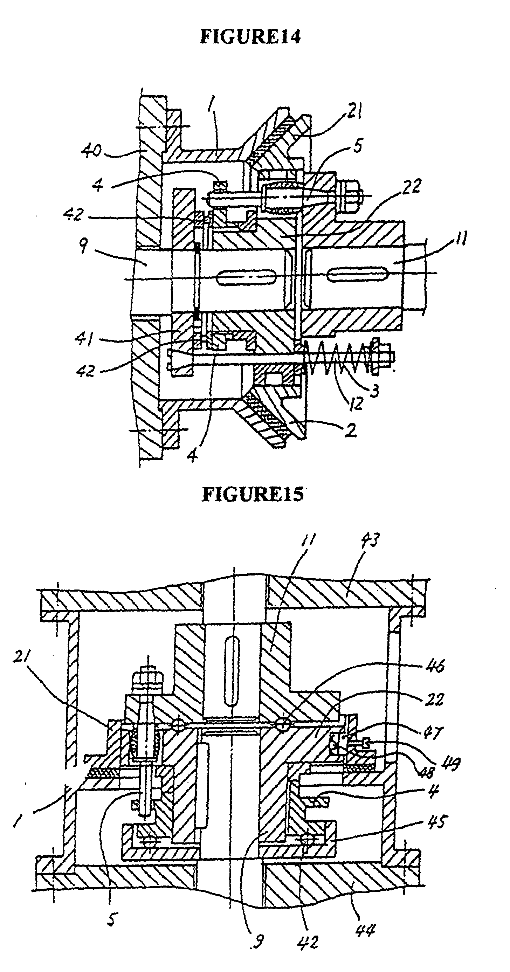

The fifth embodiment of the invention is shown in FIG. 14, in which the same or similar parts with the above-mentioned embodiments are scaled out with the same labels.

In the embodiment 5, both friction surfaces of the braking part 2 and the fixed seat I are conical surfaces.

The fixed seat 1 is directly secured on the casing (outer shell) of the driven member 40, the braking part 2 having conical friction surface comprising the conical disc 21 and core 22, adopt the same compensation system with the embodiment 2, i. e. the improved gear ring structure (not shown in the figure), one end of the connecting rod 12 is linked on an internal dead plate 41, a bearing 42 is mounted between the force switching mechanism 4 and the internal dead plate 41 to reduce the friction force of the force switching mechanism. The remaining members comprise the driving member 11, driven member 9, sliding pin 5 and the spring 3, it is unnecessary to go into details.

There follows three examples of brake assemblies which do not form part of the invention but have been indented hereing to provide some background understanding.

The first example is shown in FIG. 15, in which the same or similar parts are sectioned out in the same labels.

In this example, using the gravity force of the driving member 11 and the driven member 9 (indicates the vertical installation with the driving member on the top) are taken as the acting force and braking force to restrict the limiting displacement of the force switching mechanism, and no connecting rod is needed. The fixed seat is also taken as the coupling member of the upper driving member casing 43, and the lower driven member casing 44, a bearing 42 is mounted between the force switching mechanism 4 and the thrust plate 45, meanwhile a bearing 46 is mounted between the driving member and driven member to reduce friction force. The braking part 2 also comprises the disc 21 and the core 22, the above-mentioned compensation system may be adopted between the disc 21 and the core 22, or employing direct thread mating and set up the key 47 and the spring 48. A screw 49 is installed on the key slot position of the disc 21 when the friction part is worn out, the key 47 is pushed up to the rotatable position by the screw 49, thus the friction gap can be adjusted.

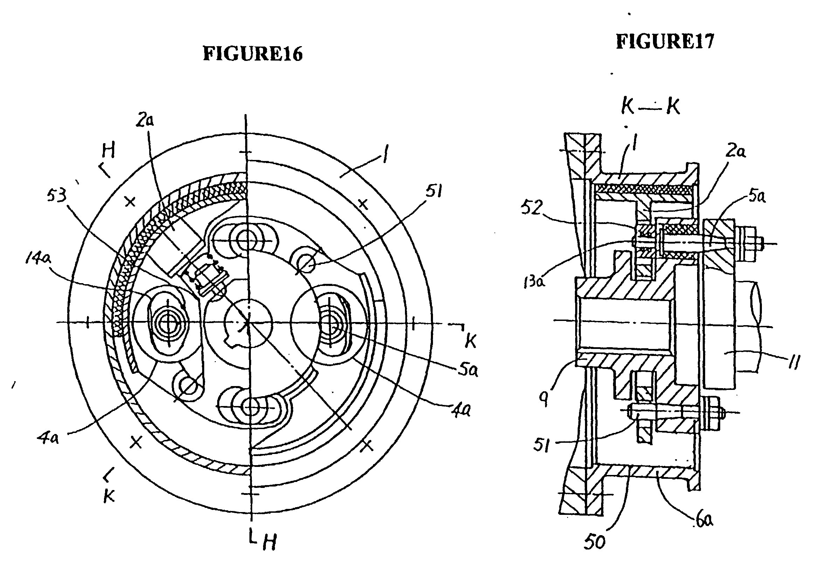

The second example is shown in FIG. 16 - FIG. 18. In that example, the same or similar parts in action are scaled out with the same labels.

The structure of this example is different from the above-mentioned first example, in which the force switching mechanism transformed the active force into radial force against the brake acting force of the spring to relieve braking. The fixed seat 1 may be secured on the casing of the driven member, and enabled to be secured on other positions. The inside of the fixed seat 1 plays a part in the brake shoe, and labeled 6a in the diagram. The cylindrical surface on the brake shoe 6a is a braking friction surface, called the braking cylindrical surface 50, the form of the braking part is a hoof block 2a, and is articulated on the driven member 9 by the support pin 51. The action of the acting block 13a in the radial force switching mechanism 4a is served by the front end of the sliding pin 5a. The acting surface of the driving block 14a is the mating surface 53 herein, and is directly secured on the hoof block 2a, the driving block 14a and the hoof block 2a may also merge into a whole, which is the situation in this embodiment. In order to reduce the driving friction of the sliding pin 5a, a rolling element is installed at the front end of 5a. In order to avoid producing radial component force between the driving member 11 and driven member 9, the radial force switching mechanism 4a is preferred to be evenly arranged relative to the centre of movement of the moving body. Two part symmetric distribution is adopted in this embodiment When the driving member acquired active force brings the sliding pin 5a into movement, on which the rolling element suppress the mating surface (see FIG. 16), producing downward radial component force against the acting force of the spring 3a, enables the brake hoof shoe 2a to move inwards taken along radial direction, and release the braking of the braking cylindrical surface, the driving member 11 and the driven member 9 run into normal operation. When the driving part 11 lost the active force, the sliding pin 5a make a reverse movement relative to the mating surface 53, and recover braking under the action of the acting force of the spring 3a.

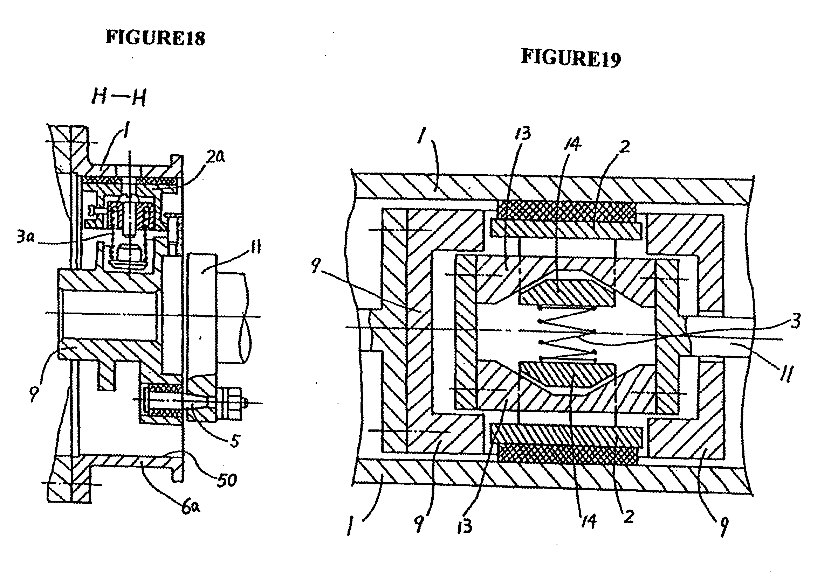

The third example is shown in FIG. 19, in which the driving member brings the driven member into rectilinear movement (i. e. the axial movement of left and right directions in the diagram).

As shown in FIG. 19, the braking part 2 and the driving block 14 merged into a whole, the two braking parts 2 locate in the notch of the two side boards of the driven member 9 respectively, the acting block locates in the notch between the braking part 2 and the driving block 14, the slope of the driving block 14 fit with the slope of the acting block 13, both ends of the spring 3 connect with the inner end of the driving block 14, the friction lining on the outboard side of the braking part 2 clutch with the braking friction surface of the fixed seat 1. When the driving member 11 acquired active force and make rectilinear movement, due to the slope action of the acting block 13, enables the driving block 14 to hold down the spring 3 and move inwards, causes the braking part 2 and the braking friction surface to separate, thereby relieves braking for the driven member 9, and the driven member 9 moves following the driving member 11. When the driving member 11 lost the active force, the spring 3 come into action, the acting block 13 and the braking part 2 merge into a whole to move from inside to outboard, the braking part 2 contact with the braking friction surface and achieve braking for the driven member 9.

The brake in the invention established force switching mechanism in said various relevant structures in the embodiment, using the active force of the driving member against the brake acting force to relieve braking, enables the passive driven member and the driving member to retain normal operation.

In comparison of existing technologies, the brake of the invention has significant substantial features, no additional power setting need to be installed, and the structure is simple, in normal operation process, it is energy saving, reliable in braking, and has extensive range in application. Especially when it is used in mine equipments having explosion-proof requirements, since no additional power setting (like electromagnet etc.) is needed, the work is completely safe and reliable.

The brake of the invention shall have vast application vistas in mining, metallurgical, lifting, architectural and general machinery equipments.

## Claims

1. A mechanical assembly comprising a mechanism located between a driving member and a driven member (11, 9), the mechanism being arranged to function as a direct coupling between the members (11, 9) when driving power is supplied to the driving member (11) and to function as a brake for both members (11, 9) when driving power is removed from the driving members (11), wherein the mechanism comprises:
a first disc attached to the driving member (11) and carrying fixedly-mounted axially-extending connector pins (5) radially offset from the axis of the driving member (11) and at their free ends the pins (5) engaging a rotatable acting block (13);
a brake shoe (6) attached to a fixed structure (1); a second disc (2) rotatably fixed to the driven member (9) and including a friction surface (8) for selectively engaging and disengaging said brake shoe (6), the connector pins (5) extending through the second disc (2) via respective holes (7) defined therein and being moveable along an arcuate path within said holes (7), said second disc (2) and acting block (13) inter-engaging by way of an annular cammed structure (15); and
a spring (3) for biasing said second disc (2) towards a braking position wherein the friction surface (8) engages the brake shoe (6);
wherein initial rotation of the driving member (11) moves the pins (5) along an arcuate path within the respective holes (7) causing the acting block (13) to rotate relative to the second disc (2) and the cammed structure (15) to move the second disc (2) axially against the bias of the spring (3) to disengage the friction surface (8) from the brake shoe (6), and further rotation of the driving member (11) causes the pins (5) to engage an extremity of the respective holes (7) so that the driving and driven members (11, 9) are directly coupled via pins (5),
and wherein removal of the driving power from the driving member (11) causes the pins (5) to disengage the extremity of the respective holes (7) and move in an opposite arcuate direction therein causing the acting block (13) to rotate relative to the second disc (2) and remove the effect of the cammed structure (15) such that the second disc (2) is moved towards the braking position by action of the spring (3).

2. A mechanical assembly as claimed in claim 1, wherein one end of said spring (3) is connected to an end of a connecting rod (12), and another end of the spring (3) engages the second disc (2).

3. A mechanical assembly as claimed in claim 1 or 2, further comprising a third disc (16) rotatably fixed to the second shaft (9) and including a friction surface for selectively engaging and disengaging said brake shoe (6), said third disc (16) inter-engaging with the acting block (13) by way of a second annular cammed structure (19) such that relative rotational motion between the third disc (16) and the acting block (13) results in the second cammed structure (19) moving the third disc (16) axially to disengage the friction surface from the brake shoe (6) against the bias of a second spring (20), and reverse rotational motion between the third disc (16) and the acting block (13) removes the effect of the second cammed structure (19) such that the third disc (16) is moved towards a braking position by action of the second spring (20) to engage the friction surface against the brake shoe (6).

4. A mechanical assembly as claimed in claim 3, wherein one end of the second spring (20) is connected to another end of the connecting rod (12), and another end of the second spring (20) engages the third disc(16).

5. A mechanical assembly as claimed in claim 1 or 2, wherein said cammed structure (15) is located between the acting block (13) and a first driving block (14) associated with the second disc (2).

6. A mechanical assembly as claimed in claim 3 or 4, wherein said second cammed structure (19) is located between the acting block (13) and a second driving block (18) associated with the third disc (16).

7. A mechanical assembly as claimed in any one of claims 2 to 6, wherein said brake shoe (6) comprises two discs slidably mounted on a supporting shaft (30) and an intermediate inner disc (29) is provided on said connecting rod (12) and is positioned between said two discs of said brake shoe (6).

8. A mechanical assembly as claimed in any preceding claim, wherein said friction surface (8) is a conical surface.

9. A mechanical assembly as claimed in any one of claims 1 to 7, wherein said friction surface (8) is a flat surface.

10. A mechanical assembly as claimed in any one of claims 1 to 7, wherein said friction surface (8) is a cylindrical surface.

## Patentansprüche

1. Mechanische Baugruppe, die einen zwischen einem Antriebselement und einem angetriebenen Element (11, 9) angeordneten Mechanismus umfaßt, wobei der Mechanismus angeordnet wird, um als eine unmittelbare Kupplung zwischen den Elementen (11, 9) zu fungieren, wenn dem Antriebselement (11) eine Antriebskraft zugeführt wird, und um als eine Bremse für die beiden Elemente (11, 9) zu fungieren, wenn die Antriebskraft vom Antriebselement (11) genommen wird, bei welcher der Mechanismus folgendes umfaßt:
eine erste Scheibe, die am Antriebselement (11) befestigt wird und feststehend angebrachte, in Axialrichtung verlaufende Verbindungsstifte (5) trägt, in Radialrichtung versetzt von der Achse des Antriebselements (11), und wobei die Stifte (5) an ihren freien Enden mit einem drehbaren Bewegungsblock (13) ineinandergreifen,
eine an einer feststehenden Struktur (1) angebrachte Bremsbacke (6),
eine zweite Scheibe (2), die drehbar am angetriebenen Element (9) befestigt wird und eine Reibungsfläche (8) einschließt, um selektiv mit der Bremsbacke (6) ineinanderzugreifen oder von derselben auszurücken, wobei die Verbindungsstifte (5) sich über entsprechende in derselben definierte Löcher (7) durch die zweite Scheibe (2) erstrecken und längs einer bogenförmigen Bahn innerhalb der Löcher (7) bewegt werden können, wobei die zweite Scheibe (2) und der Bewegungsblock (13) mit Hilfe einer ringförmigen Nockenstruktur (15) ineinandergreifen, und
eine Feder (3) zum Vorspannen der zweiten Scheibe (2) zu einer Bremsposition hin, in der die Reibungsfläche (8) mit der Bremsbacke (6) ineinandergreift,
bei der eine anfängliche Drehung des Antriebselements (11) die Stifte (5) längs einer bogenförmigen Bahn innerhalb der entsprechenden Löcher (7) bewegt und bewirkt, daß sich der Bewegungsblock (13) im Verhältnis zur zweiten Scheibe (2) dreht und die Nockenstruktur (15) die zweite Scheibe (2) in Axialrichtung gegen die Vorspannung der Feder (3) bewegt, um die Reibungsfläche (8) von der Bremsbacke (6) auszurücken, und eine weitere Drehung des Antriebselements (11) bewirkt, daß die Stifte (5) mit dem einen Ende der entsprechenden Löcher (7) ineinandergreifen, so daß das Antriebs- und das angetriebene Element (11, 9) über die Stifte (5) unmittelbar gekoppelt werden,
und bei der ein Wegnehmen der Antriebskraft vom Antriebselement (11) bewirkt, daß die Stifte (5) vom Ende der entsprechenden Löcher (7) ausrücken und sich in denselben in einer entgegengesetzten bogenförmigen Richtung bewegen und bewirken, daß sich der Bewegungsblock (13) im Verhältnis zur zweiten Scheibe (2) dreht und die Wirkung der Nockenstruktur (15) wegnimmt, so daß die zweite Scheibe (2) durch die Wirkung der Feder (3) zur Bremsposition hin bewegt wird.

2. Mechanische Baugruppe nach Anspruch 1, bei der ein Ende der Feder (3) mit einem Ende einer Verbindungsstange (12) verbunden wird und ein anderes Ende der Feder (3) mit der zweiten Scheibe (2) ineinandergreift.

3. Mechanische Baugruppe nach Anspruch 1 oder 2, die außerdem eine dritte Scheibe (16) umfaßt, die drehbar an der zweiten Welle (9) befestigt wird und eine Reibungsfläche einschließt, um selektiv mit der Bremsbacke (6) ineinanderzugreifen oder von derselben auszurücken, wobei die dritte Scheibe (16) mit Hilfe einer zweiten ringförmigen Nockenstruktur (19) derart mit dem Bewegungsblock (13) ineinandergreift, daß eine relative Drehbewegung zwischen der dritten Scheibe (16) und dem Bewegungsblock (13) dazu führt, daß die zweite Nockenstruktur (19) die dritte Scheibe (16) in Axialrichtung bewegt, um die Reibungsfläche gegen die Vorspannung einer zweiten Feder (20) von der Bremsbacke (6) auszurücken, und eine ungekehrte Drehbewegung zwischen der dritten Scheibe (16) und dem Bewegungsblock (13) die Wirkung der zweiten Nockenstruktur (19) wegnimmt, so daß die dritte Scheibe (16) durch die Wirkung der zweiten Feder (20) zu einer Bremsposition hin bewegt wird, um die Reibungsfläche in Eingriff gegen die Bremsbacke (6) zu bringen.

4. Mechanische Baugruppe nach Anspruch 3, bei der ein Ende der zweiten Feder (20) mit einem anderen Ende der Verbindungsstange (12) verbunden wird und ein anderes Ende der zweiten Feder (20) mit der dritten Scheibe (16) ineinandergreift.

5. Mechanische Baugruppe nach Anspruch 1 oder 2, bei der die Nockenstruktur (15) zwischen dem Bewegungsblock (13) und einem ersten, der zweiten Scheibe (2) zugeordneten, Antriebsblock (14) angeordnet wird.

6. Mechanische Baugruppe nach Anspruch 3 oder 4, bei der die zweite Nockenstruktur (19) zwischen dem Bewegungsblock (13) und einem zweiten, der dritten Scheibe (16) zugeordneten, Antriebsblock (18) angeordnet wird.

7. Mechanische Baugruppe nach einem der Ansprüche 2 bis 6, bei der die Bremsbacke (6) zwei verschiebbar auf einem Tragschaft (30) angebrachte Scheiben umfaßt und auf der Verbindungsstange (12) eine innere Zwischenscheibe (29) bereitgestellt wird und zwischen den zwei Scheiben der Bremsbacke (6) angeordnet wird.

8. Mechanische Baugruppe nach einem der vorhergehenden Ansprüche, bei der die Reibungsfläche (8) eine konische Fläche ist.

9. Mechanische Baugruppe nach einem der Ansprüche 1 bis 7, bei der die Reibungsfläche (8) eine flache Fläche ist.

10. Mechanische Baugruppe nach einem der Ansprüche 1 bis 7, bei der die Reibungsfläche (8) eine zylindrische Fläche ist.

## Revendications

1. Assemblage mécanique comprenant un mécanisme agencé entre un élément d'entraînement et un élément entraîné (11, 9), le mécanisme étant destiné à faire fonction d'accouplement direct entre les éléments (11, 9) lorsque l'élément d'entraînement (11) est alimenté en énergie d'entraînement, et à faire fonction de frein pour les deux éléments (11, 9) lorsque l'élément d'entraînement (11) n'est pas alimenté en énergie d'entraînement, le mécanisme comprenant:
un premier disque fixé à l'élément d'entraînement (11) et supportant des broches de connexion à extension axiale et à montage fixe (5), décalées radialement de l'axe de l'élément d'entraînement (11), les broches (5) s'engageant au niveau de leurs extrémités libres dans un bloc à action rotatif (13);
un sabot de frein (6) fixé sur une structure fixe (1);
un deuxième disque (2) fixé par rotation sur l'élément entraîné (9) et englobant une surface de frottement (8) destinée à s'engager sélectivement dans ledit sabot de frein (6) et à se dégager de celui-ci, les broches de connexion (5) s'étendant à travers le deuxième disque (2) par l'intermédiaire de trous respectifs (7) qui y sont définis et pouvant être déplacées le long d'une trajectoire arquée dans lesdits trous (7), ledit deuxième disque (2) et le bloc d'action (13) s'engageant mutuellement par l'intermédiaire d'une structure à came annulaire (15); et
un ressort (3) pour pousser ledit deuxième disque (2) vers une position de freinage, dans laquelle la surface de frottement (8) s'engage dans le sabot de frein (6);
la rotation initiale de l'élément d'entraînement (11) déplaçant les broches (5) le long d'une trajectoire arquée dans les trous respectifs (7), entraînant la rotation du bloc d'action (13) par rapport au deuxième disque (2), la structure à came (15) déplaçant le deuxième disque (2) axialement contre la poussée du ressort (3) pour dégager la surface de frottement (8) du sabot de frein (6), une rotation ultérieure de l'élément d'entraînement (11) entraînant l'engagement des broches (5) dans une extrémité des trous respectifs (7) de sorte que les éléments d'entraînement et entraîné (11, 9) sont directement accouplés par l'intermédiaire des broches (5),
le retrait de l'énergie d'entraînement de l'élément d'entraînement (11) entraînant le dégagement des broches (5) de l'extrémité des trous respectifs (7) et leur déplacement dans une direction arquée opposée, entraînant ainsi la rotation du bloc d'action (13) par rapport au deuxième disque (2) et la suppression de l'effet de la structure à came (15), de sorte que le deuxième disque (2) est déplacé vers la position de freinage par l'action du ressort (3).

2. Assemblage mécanique selon la revendication 1, dans lequel une extrémité dudit ressort (3) est connectée à une extrémité d'une tige de connexion (12), une autre extrémité du ressort (3) s'engageant dans le deuxième disque (2).

3. Assemblage mécanique selon les revendications 1 ou 2, comprenant en outre un troisième disque (16) fixé par rotation sur le deuxième arbre (9) et englobant une surface de frottement destinée à s'engager sélectivement dans ledit sabot de frein (6) et à se dégager de celui-ci, ledit troisième disque (16) s'engageant dans le bloc d'action (13) par l'intermédiaire d'une deuxième structure à came annulaire (19), de sorte que la rotation relative entre le troisième disque (16) et le bloc d'action (13) entraîne le déplacement axial du troisième disque (16) par la deuxième structure à came (19) pour dégager la surface de frottement du sabot de frein (6), contre la poussée d'un deuxième ressort (20), une rotation inverse entre le troisième disque (16) et le bloc d'action (13) supprimant l'effet de la deuxième structure à came (19), de sorte que le troisième disque (16) est déplacé vers une position de freinage par l'intermédiaire du deuxième ressort (20) pour engager la surface de frottement contre le sabot de frein (6).

4. Assemblage mécanique selon la revendication 3, dans lequel une extrémité du deuxième ressort (20) est connectée à une autre extrémité de la tige de connexion (12), une autre extrémité du deuxième ressort (20) s'engageant dans le troisième disque (16).

5. Assemblage mécanique selon les revendications 1 ou 2, dans lequel ladite structure à came (15) est agencée entre le bloc d'action (13) et un premier bloc d'entraînement (14) associé au deuxième disque (2).

6. Assemblage mécanique selon les revendications 3 ou 4, dans lequel ladite deuxième structure à came (19) est agencée entre le bloc d'action (13) et un deuxième bloc d'entraînement (18) associé au troisième disque (16).

7. Assemblage mécanique selon l'une quelconque des revendications 2 à 6, dans lequel ledit sabot de frein (6) comprend deux disques montés par glissement sur un arbre de support (30), un disque interne intermédiaire (29) étant agencé sur ladite tige de connexion (12) et positionné entre lesdits deux disques dudit sabot de frein (6).

8. Assemblage mécanique selon l'une quelconque des revendications précédentes, dans lequel ladite surface de frottement (8) est une surface conique.

9. Assemblage mécanique selon l'une quelconque des revendications 1 à 7, dans lequel ladite surface de frottement (8) est une surface plate.

10. Assemblage mécanique selon l'une quelconque des revendications 1 à 7, dans lequel ladite surface de frottement (8) est une surface cylindrique.
